(19) Europäisches Patentamt / European Patent Office / Office européen des brevets

(11) **EP 4 242 278 A1**

(12) **EUROPEAN PATENT APPLICATION**
published in accordance with Art. 153(4) EPC

(43) Date of publication:
**13.09.2023 Bulletin 2023/37**

(21) Application number: **21889648.8**

(22) Date of filing: **08.11.2021**

(51) International Patent Classification (IPC):
**C09J 7/38** (2018.01)    **C09J 4/00** (2006.01)
**C09J 133/00** (2006.01)    **C08K 9/10** (2006.01)
**C08K 5/5415** (2006.01)

(52) Cooperative Patent Classification (CPC):
**C08K 5/5415; C08K 9/10; C09J 4/00; C09J 7/38; C09J 133/00**

(86) International application number:
**PCT/KR2021/016105**

(87) International publication number:
**WO 2022/098183 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.11.2020 KR 20200148638**

(71) Applicant: **Samsung SDI Co., Ltd.**
**Yongin-si, Gyeonggi-do 17084 (KR)**

(72) Inventors:
  • **SHIN, Dong Myeong**
    **Suwon-si Gyeonggi-do 16678 (KR)**
  • **KIM, Ji Yeon**
    **Suwon-si Gyeonggi-do 16678 (KR)**
  • **LEE, Jin Young**
    **Suwon-si Gyeonggi-do 16678 (KR)**
  • **HAN, Jae Hyun**
    **Suwon-si Gyeonggi-do 16678 (KR)**
  • **KIM, Il Jin**
    **Suwon-si Gyeonggi-do 16678 (KR)**
  • **PARK, Kyoung Gon**
    **Suwon-si Gyeonggi-do 16678 (KR)**

(74) Representative: **Michalski Hüttermann & Partner Patentanwälte mbB**
**Kaistraße 16A**
**40221 Düsseldorf (DE)**

(54) **ADHESIVE FILM, OPTICAL MEMBER COMPRISING SAME, AND OPTICAL DISPLAY DEVICE COMPRISING SAME**

(57)    Provided are an adhesive film, an optical member comprising same, and an optical display device comprising same, the adhesive film being formed of a composition that includes: a monomer mixture including a monomer having a glass transition temperature of homopolymer of about -50°C or less, and (meth)acrylate having a hydroxyl group; and an epoxy silane coupling agent, wherein a variation of the shear strain rate of equation 1 is about 10% or less for the adhesive film.

【FIG. 1】

EP 4 242 278 A1

**Description**

[Technical Field]

The present invention relates to an adhesive film, an optical member including the same, and an optical display apparatus including the same.

[Background Art]

An optical display device includes multiple optical elements stacked one above another via adhesive films. A typical adhesive film is manufactured by coating a composition for adhesive films on one surface of a release film and curing the composition, followed by punching according to the size of the optical element.

In recent years, with development of a foldable optical display, an adhesive film having foldability has been developed. The adhesive film having foldability exhibits significantly different rheological properties from typical adhesive films.

There is a need for an adhesive film having waterproof properties to secure durability of the adhesive film. That is, there is an increasing need for an adhesive film that can exhibit high peel strength and no variation in rheological properties to efficiently realize folding performance even after the adhesive film or an optical display device including the adhesive film is immersed in water. Therefore, there is a need for development of an adhesive film that has good waterproof properties and good foldability while exhibiting a low variation rate of peel strength and good folding performance even after the adhesive film is left under high temperature/humidity conditions for a long time.

The background technique of the present invention is disclosed in Korean Patent Laid-open Publication No. 2017-0070370 and the like.

[Disclosure]

[Technical Problem]

It is one aspect of the present invention to provide an adhesive film that has good foldability at low temperature and good foldability at high temperature.

It is another aspect of the present invention to provide an adhesive film that has good flexural reliability by realizing good foldability at low temperature and good foldability at high temperature even after the adhesive film is left under high temperature and high humidity conditions for a long time.

It is a further aspect of the present invention to provide an adhesive film that is suitable for a foldable display device requiring waterproof properties by exhibiting less variation in peel strength, rheological properties and durability, compared to an initial adhesive film, even after the adhesive film is left under high temperature and high humidity conditions for a long time.

It is a further aspect of the present invention to provide an adhesive film that has good waterproof properties to be suitable for a foldable display device requiring waterproof properties.

[Technical Solution]

One aspect of the present invention relates to an adhesive film.

1. The adhesive film is formed of a composition including a monomer mixture including a monomer having a glass transition temperature of about -50°C or less in homopolymer phase and a hydroxyl group-containing (meth)acrylate, and an epoxy-based silane coupling agent, and the adhesive film has a variation rate of shear strain of about 10% or less, as calculated according to Equation 1:

$$[\text{Equation 1}]$$

$$\text{Variation rate of shear strain} = [|B - A|/A] \times 100,$$

(wherein in Equation 1, A is an initial shear strain value of the adhesive film (unit: %),
B is a shear strain value of the adhesive film (unit: %) obtained from an adhesive sheet including the adhesive film and polyethylene terephthalate release films stacked on both surfaces of the adhesive film, as measured after the specimen is left at 60°C and 95% relative humidity for 10 days and left at 25°C for 2 hours).

2. In 1, the adhesive film may have an A value of about 10% or more and a B value of about 10% or more in Equation 1.

3. In 1 to 2, the adhesive film may have an initial modulus of about 0.3 MPa or less, as measured at -20°C.

4. In 1 to 3, the adhesive film may have an initial modulus of about 0.05 MPa or less, as measured at 60°C.

5. In 1 to 4, the adhesive film may have a variation rate of peel strength of about 20% or less, as calculated according to Equation 2:

[Equation 2]

$$\text{Variation rate of peel strength} = [|D - C|/C] \times 100,$$

(wherein in Equation 2, C is an initial peel strength value of the adhesive film (unit: gf/25 mm) with respect to a glass plate in a specimen in which the glass plate, the adhesive film, and a corona-treated polyethylene terephthalate film are sequentially stacked one above another,

D is a peel strength value of the adhesive film (unit: gf/25 mm) with respect to the glass plate, as measured after the specimen is left at 60°C and 95% relative humidity for 10 days and left at 25°C for 2 hours).

6. In 5, the adhesive film may have a D value of about 400 gf/25 mm or more in Equation 2.

7. In 1 to 6, the adhesive film may have a modulus of about 0.3 MPa or less, as measured at -20°C after the adhesive film is left under conditions of 60°C and 95% relative humidity for 10 days.

8. In 1 to 7, the adhesive film may have a variation rate of modulus of about 10% or less, as calculated according to Equation 3:

[Equation 3]

$$\text{Variation rate of modulus} = [|F - E|/E] \times 100,$$

(wherein in Equation 3, E is an initial modulus value of the adhesive film (unit: MPa), as measured at 60°C,

F is a modulus value of the adhesive film (unit: MPa) obtained from an adhesive sheet including the adhesive film and polyethylene terephthalate release films stacked on both surfaces of the adhesive film, as measured at 60°C after the adhesive sheet is left at 60°C and 95% relative humidity for 10 days and left at 25°C for 2 hours).

9. In 1 to 8, the epoxy-based silane coupling agent may be present in an amount of about 0.2 parts by weight to about 5 parts by weight relative to 100 parts by weight of the monomer mixture.

10. In 1 to 9, the epoxy-based silane coupling agent may include at least one selected from among 2-(3,4-epoxycyclohexyl)ethyl trimethoxysilane, 3-glicydoxypropylmethyl dimethoxysilane, 3-glicydoxypropyl trimethoxysilane, 3-glicydoxypropylmethyl diethoxysilane, and 3-glicydoxypropyl triethoxysilane.

11. In 1 to 10, the monomer having a glass transition temperature of about -50°C or less in homopolymer phase may have a branched chain.

12. In 1 to 11, the monomer having a glass transition temperature of about -50°C or less in homopolymer phase may include a mixture of a (meth)acrylic acid ester containing an unsubstituted $C_3$ to $C_{20}$, an alkylene glycol group-free alkyl group and a (meth)acrylic acid ester containing an unsubstituted $C_3$ to $C_{20}$, an alkylene glycol group-containing alkyl group.

13. In 12, each of the alkylene glycol group-free alkyl group and the alkylene glycol group-containing alkyl group may have a branched chain.

14. In 12 to 13, the (meth)acrylic acid ester containing an unsubstituted $C_3$ to $C_{20}$, an alkylene glycol group-free alkyl group may be present in an amount of about 50 wt% to about 80 wt% in the monomer mixture.

15. In 12 to 14, the (meth)acrylic acid ester containing an unsubstituted $C_3$ to $C_{20}$, an alkylene glycol group-containing alkyl group may be present in an amount of about 10 wt% to about 40 wt% in the monomer mixture.

16. In 1 to 15, the monomer mixture may include about 50 wt% to about 99 wt% of the monomer having a glass transition temperature of about -50°C or less in homopolymer phase and about 1 wt% to about 50 wt% of the hydroxyl group-containing (meth)acrylate.

17. In 1 to 16, the adhesive film may further include organic nanoparticles.

18. In 17, the organic nanoparticles may be present in an amount of about 0.1 parts by weight to about 20 parts by weight relative to 100 parts by weight of the monomer mixture.

19. In 17 and 18, the organic nanoparticles may include core-shell type nanoparticles satisfying Equation 4:

[Equation 4]

$$Tg(c) < Tg(s),$$

(wherein in Equation 4, Tg(c) is a glass transition temperature of the core (unit: °C),
Tg(s) is a glass transition temperature of the shell (unit: °C)).

An optical member according to the present invention includes an optical film and the adhesive film according to the present invention formed on at least one surface of the optical film.

An optical display apparatus according to the present invention includes the adhesive film according to the present invention.

[Advantageous Effects]

The present invention provides an adhesive film that has good foldability at low temperature and good foldability at high temperature.

The present invention provides an adhesive film that has good flexural reliability by realizing good foldability at low temperature and good foldability at high temperature even after the adhesive film is left under high temperature and high humidity conditions for a long time.

The present invention provides an adhesive film that is suitable for a foldable display device requiring waterproof properties by exhibiting less variation in peel strength, rheological properties and durability, compared to an initial adhesive film, even after the adhesive film is left under high temperature and high humidity conditions for a long time.

The present invention provides an adhesive film that has good waterproof properties to be suitable for a foldable display device requiring waterproof properties.

[Description of Drawings]

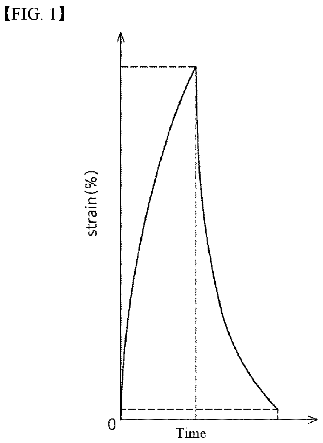

FIG. 1 is a graph depicting one example of measurement of shear strain according to the present invention.

[Best Mode]

Hereinafter, exemplary embodiments of the present invention will be described in detail so as to be easily implemented by a person having ordinary knowledge in the art. It should be understood that the present invention may be realized in various ways and is not limited to the following embodiments.

Herein, "acryl" may mean acryl and/or methacryl.

Herein, "copolymer" may include an oligomer, a polymer, or a resin.

Herein, "average particle diameter" of organic nanoparticles refers to a particle diameter thereof that is measured in a water-based or organic solvent using a Zetasizer nano-ZS (Malvern Co., Ltd.) and represented by a Z-average value, and is observed by SEMITEM.

Herein, "modulus" of an adhesive film means storage modulus (G') thereof.

Herein, "shear strain" is a value measured at 60°C and means a degree of deformation of a material upon application of force to the material in a certain shear direction. Referring to FIG. 1, shear strain refers to a strain value at 600 seconds upon measurement of strain of an adhesive film under conditions upon application of force to the adhesive film under conditions described in examples over time.

Herein, "glass transition temperature in homopolymer phase" may mean a glass transition temperature (Tg) of a target monomer in a homopolymer phase, as measured using a DSC Discovery (TA Instrument Inc.). Specifically, the homopolymer of the target monomer may be heated to 180°C at 20°C/min, slowly cooled to -100°C at the same rate, and heated again to 100°C at 10°C/min in order to obtain an endothermic transition curve. Then, an inflection point of the endothermic transition curve may be determined as the glass transition temperature.

As used herein to represent a specific numerical range, "X to Y" means a value greater than or equal to X and less than or equal to Y (X≤ and ≤ Y).

An adhesive film according to the present invention has good foldability at low temperature and good foldability at high temperature and can exhibit good flexural reliability by realizing good foldability at low temperature and good foldability at high temperature even after the adhesive film is left under high temperature and high humidity conditions for a long time. The adhesive film according to the present invention is suitable for a foldable display device requiring waterproof properties by exhibiting less variation in peel strength, rheological properties and durability, compared to the initial adhesive film, even after the adhesive film is left under high temperature and high humidity conditions for a long time. Accordingly, the adhesive film according to the present invention can be suitably used for a foldable display device requiring good waterproof properties.

Hereinafter, an adhesive film according to one embodiment of the present invention will be described.

The adhesive film according to this embodiment (hereinafter, "the adhesive film") is formed of a composition including a monomer mixture of a monomer having a glass transition temperature of about -50°C or less in homopolymer phase and a hydroxyl group-containing (meth)acrylate, and an epoxy-based silane coupling agent, and the adhesive film has a variation rate of shear strain of about 10% or less, as calculated according to Equation 1:

$$[\text{Equation 1}]$$

$$\text{Variation rate of shear strain} = [|B - A|/A] \times 100,$$

(wherein in Equation 1, A is an initial shear strain value of the adhesive film (unit: %),

B is a shear strain value of the adhesive film (unit: %) obtained from an adhesive sheet including the adhesive film and polyethylene terephthalate release films stacked on both surfaces of the adhesive film, as measured after the specimen is left at 60°C and 95% relative humidity for 10 days and left at 25°C for 2 hours).

In one embodiment, the adhesive film may have a variation rate of shear strain of, for example, about 0, 0.1, 1, 2, 3, 4, 5, 6, 7, 8, 9, or 10%, specifically 0% to 10%, more specifically 0% to 5%, for example, 0.1% to 4%, as calculated according to Equation 1.

In one embodiment, each of the shear strain values A and B in Equation 1 may be about 10% or more, for example, 10, 11, 12, 13, 14, 15, 16, 17, 18, 19, 20, 21, 22, 23, 24, 25, 26, 27, 28, 29, or 30%, specifically 10% to 30%, more specifically 18% to 25%. Within this range, the adhesive film can secure folding reliability.

The polyethylene terephthalate release film may be a polyethylene terephthalate film having one surface adjoining the adhesive film and being subjected to release treatment (for example, silicone treatment or fluorine treatment) and may have a thickness of 30 $\mu$m to 100 $\mu$m.

The composition for the adhesive film includes the monomer mixture that includes the monomer having a homopolymer glass transition temperature of about - 50°C or less and the hydroxyl group-containing (meth)acrylate. As a result, the adhesive film can exhibit high initial peel strength and good foldability at low temperature.

In one embodiment, the adhesive film may have an initial peel strength of about 400 gf/25 mm or more, for example, 400, 450, 500, 550, 600, 650, 700, 750, 800, 850, 900, 950, or 1,000 gf/25 mm, specifically 400 gf/25 mm to 1,000 gf/25 mm, with respect to a glass plate. Within this range, the adhesive film can have good peel strength with respect to an adherend to prevent the adhesive film from being peeled off the adherend upon folding operation, thereby realizing good foldability.

Here, "initial peel strength" means peel strength of the adhesive film, as measured on a specimen for measurement of peel strength before the specimen is left under conditions of 60°C and 95% relative humidity for 10 days.

The monomer having a glass transition temperature of about -50°C or less in homopolymer phase can allow the adhesive film to have foldability at low temperature by lowering initial modulus of the adhesive film at low temperature. In one embodiment, the adhesive film may have an initial modulus of about 0.3 MPa or less at -20°C, for example, 0.01, 0.05, 0.1, 0.15, 0.2, 0.25, or 0.3 MPa, specifically 0.01 MPa to 0.3 MPa, or 0.05 MPa to 0.15 MPa. Within this range, the adhesive film can secure viscoelasticity at low temperature to exhibit good foldability at low temperature.

The monomer having a glass transition temperature of about -50°C or less in homopolymer phase can assist the adhesive film to have foldability at high temperature by lowering initial modulus of the adhesive film at high temperature. In one embodiment, the adhesive film may have an initial modulus of about 0.05 MPa or less at 60°C, for example, 0.01, 0.02, 0.03, 0.04, or 0.05 MPa, specifically 0.01 MPa to 0.05 MPa, or 0.02 MPa to 0.03 MPa. Within this range, the adhesive film can secure viscoelasticity at high temperature to exhibit good foldability and recovery at high temperature.

The monomer having a glass transition temperature of about -50°C or less in homopolymer phase may allow the adhesive film to have an initial shear strain of about 10% or more, for example, 10, 11, 12, 13, 14, 15, 16, 17, 18, 19, 20, 21, 22, 23, 24, 25, 26, 27, 28, 29, or 30%, for example, 10% to 30%, or 18% to 25%. Within this range, the adhesive film can secure folding reliability at low temperature.

The monomer having a glass transition temperature of about -50°C or less in homopolymer phase may include an (meth)acrylic acid ester having a branched chain type alkyl group, a branched chain type alkylene group, a branched chain type alkyleneoxy group, or a functional group containing the same, at an ester site in the (meth)acrylic acid ester. The branched chain type alkyl group, the branched chain type alkylene group or the branched chain type alkyleneoxy group can further improve foldability of the adhesive film at low temperature by further lowering modulus of the adhesive film at low temperature.

The branched chain type alkyl group may be a $C_3$ to $C_{20}$ branched chain type alkyl group and may be, for example, an ethylhexyl group, an isooctyl group, an isodecyl group, or the like. The branched chain type alkylene group may be a $C_3$ to $C_{20}$ branched chain type alkylene group and may include an ethylhexylene group, an isooctylene group, an isodecylene group, or the like. The branched chain type alkyleneoxy group may be a $C_3$ to $C_{20}$ branched chain type alkyleneoxy group.

Preferably, the monomer having a glass transition temperature of about - 50°C or less in homopolymer phase may have a glass transition temperature of, for example, -100, -95, -90, -85, -80, -75, -70, -65, -60, -55, or -50°C, for example, - 100°C to -50°C, more preferably -80°C to -50°C. Within this range, the monomer can lower modulus of the adhesive film at low temperature.

The monomer mixture may include one or more types, that is, one type or at least two types of the monomer having a glass transition temperature of about - 50°C or less in homopolymer phase. The monomer having a glass transition temperature of about -50°C or less in homopolymer phase may be present in an amount of about 50 wt% to about 99 wt%, for example, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%, specifically 60 wt% to 90 wt%, more specifically 70 wt% to 85 wt%, in the monomer mixture. Within this range, the adhesive film can have reduced modulus at low temperature to exhibit good foldability at low temperature.

In one embodiment, the monomer having a glass transition temperature of about -50°C or less in homopolymer phase may include a mixture of a (meth)acrylic acid ester containing an unsubstituted $C_3$ to $C_{20}$, preferably $C_3$ to $C_{10}$, an alkylene glycol group-free alkyl group and a (meth)acrylic acid ester containing an unsubstituted $C_3$ to $C_{20}$, preferably $C_{10}$ to $C_{20}$, an alkylene glycol group-containing alkyl group. As a result, the monomer allows the adhesive film to easily realize the effects of the present invention and can assist the adhesive film to maintain foldability and peel strength even after the adhesive film is left under high temperature and high humidity conditions for a long time.

The (meth)acrylic acid ester containing an unsubstituted $C_3$ to $C_{20}$, an alkylene glycol group-free alkyl group may include at least one selected from among 2-ethylhexyl (meth)acrylate, isooctyl acrylate, and isodecyl acrylate. The alkylene glycol group-free alkyl group may be a branched chain.

The (meth)acrylic acid ester containing an unsubstituted $C_3$ to $C_{20}$, an alkylene glycol group-containing alkyl group may include a mono-functional (meth)acrylate containing multiple alkylene glycol units. The alkylene glycol units may be homogeneous or heterogeneous units. The alkylene glycol units may include $C_1$ to $C_5$ alkylene glycol units, for example, ethylene glycol and propylene glycol. The alkylene glycol group-containing alkyl group may be a branched chain.

The (meth)acrylic acid ester containing an unsubstituted $C_3$ to $C_{20}$, an alkylene glycol group-free alkyl group may be present in an amount of about 50 wt% to about 80 wt%, for example, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80 wt%, specifically 50 wt% to 70 wt%, in the monomer mixture. Within this range, the adhesive film can have high peel strength and can secure good foldability at low temperature and good foldability at high temperature.

The (meth)acrylic acid ester containing an unsubstituted $C_3$ to $C_{20}$, an alkylene glycol group-containing alkyl group may be present in an amount of about 10 wt% to about 40 wt%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 wt%, specifically 15 wt% to 30 wt%, in the monomer mixture. Within this range, the adhesive film can have high peel strength and can secure good foldability at low temperature and good foldability at high temperature.

The hydroxyl group-containing (meth)acrylate can impart peel strength to the adhesive film. The hydroxyl group-containing (meth)acrylate may include a (meth)acrylate containing $C_1$ to $C_{10}$ alkyl group having at least one hydroxyl group. For example, the hydroxyl group-containing (meth)acrylate may include at least one selected from among 2-hydroxybutyl (meth)acrylate, 4-hydroxybutyl (meth)acrylate, 2-hydroxyethyl (meth)acrylate, 2-hydroxypropyl (meth)acrylate, 3-hydroxypropyl (meth)acrylate, and 6-hydroxyhexyl (meth)acrylate, without being limited thereto.

The monomer mixture may include one or more types, that is, one type or at least two types of, the hydroxyl group-containing (meth)acrylate. The hydroxyl group-containing (meth)acrylate may be present in an amount of about 1 wt% to about 50 wt%, for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 wt%, specifically 10 wt% to 40 wt%, more specifically 15 wt% to 30 wt%, in the monomer mixture. Within this range, the adhesive film can achieve further improvement in peel strength and durability.

The monomer mixture may further include a copolymerizable monomer in addition to the monomer having a glass transition temperature of about -50°C or less in homopolymer phase and the hydroxyl group-containing (meth)acrylate. The copolymerizable monomer further added to the monomer mixture can provide additional effects to the adhesive film. The copolymerizable monomer may be a different kind of monomer than the aforementioned monomers and may include at least one selected from among an amine group-containing monomer, an alkoxy group-containing monomer, a phosphate group-containing monomer, a sulfonic acid group-containing monomer, a phenyl group-containing monomer, a silane group-containing monomer, a carboxylic acid group-containing monomer, and an amide group-containing monomer.

The amine group-containing monomer may be an amine group-containing acrylic monomer, such as monomethylaminoethyl acrylate, monoethylaminoethyl acrylate, monomethylaminopropyl acrylate, monoethylaminopropyl acrylate, dimethylaminoethyl acrylate, diethylaminoethyl acrylate, N-tert-butylaminoethyl acrylate, acryloxyethyltrimethyl ammonium chloride acrylate, and the like, without being limited thereto.

The alkoxy group-containing monomer may include 2-methoxyethyl acrylate, 2-methoxypropyl acrylate, 2-ethoxypropyl acrylate, 2-butoxypropyl acrylate, 2-methoxypentyl acrylate, 2-ethoxypentyl acrylate, 2-butoxyhexyl acrylate, 3-methoxypentyl acrylate, 3-ethoxypentyl acrylate, and 3-butoxyhexyl acrylate, without being limited thereto.

The phosphate group-containing monomer may be a phosphate group-containing acrylic monomer, such as 2-methacryloyloxyethyldiphenylphosphate acrylate, trimethacryloyloxyethylphosphate acrylate, triacryloyloxyethylphosphate acrylate, and the like, without being limited thereto.

The sulfonic acid group-containing monomer may be a sulfonic acid group-containing acrylic monomer, such as sodium sulfopropylacrylate, sodium 2-sulfoethyl acrylate, sodium 2-acrylamido-2-methylpropane sulfonate, and the like, without being limited thereto.

The phenyl group-containing monomer may be a phenyl group-containing acrylic monomer, such as p-tert-butylphenyl acrylate, o-biphenyl acrylate, phenoxyethyl acrylate, and the like, without being limited thereto.

The silane group-containing monomer may be a silane group-containing vinyl monomer, such as 2-acetoacetoxyethylacrylate, vinyl trimethoxysilane, vinyl triethoxysilane, vinyl tris(2-methoxyethyl)silane, vinyl triacetoxysilane, acryloyloxypropyltrimethoxysilane, or the like, without being limited thereto.

The carboxylic acid group-containing monomer may be acrylic acid, 2-carboxyethyl acrylate, 3-carboxypropyl acrylate, 4-carboxybutyl acrylate, itaconic acid, crotonic acid, maleic acid, fumaric acid, maleic anhydride, or the like, without being limited thereto.

The amide group-containing monomer may be acrylamide, N-methylacrylamide, N-methylolacrylamide, N-methoxymethylacrylamide, N,N-methylenebisacrylamide, N-hydroxyethylacrylamide, N,N-diethylacrylamide, or the like, without being limited thereto.

The copolymerizable monomer may be present in an amount of 30 wt% or less, preferably 0 wt% to 30 wt%, in the monomer mixture. Within this range, the adhesive film can allow adjustment in adhesion to an adherend and optical properties.

The epoxy-based silane coupling agent allows the adhesive film to exhibit similar shear strain to initial shear strain thereof without significant change even after the adhesive film is left under high temperature and high humidity conditions for a long time, whereby the adhesive film can have a variation rate of shear strain of 10% or less, as calculated according to Equation 1, between before and after the adhesive film is left under high temperature and high humidity conditions for a long time.

As a result, the adhesive film can maintain foldability at low temperature and at high temperature even after the adhesive film is left under high temperature and high humidity conditions for a long time, and can exhibit good waterproof properties by reducing the variation rate of peel strength even after the adhesive film is left under high temperature and high humidity conditions for a long time.

In one embodiment, the adhesive film may have a variation rate of shear strain of about 10% or less, as calculated according to Equation 1. The inventors of the present invention confirmed that the adhesive film could exhibit the effects of the present invention as the composition includes the epoxy-based silane coupling agent in addition to the monomer mixture. It was confirmed that the effects of the present invention could not be achieved in use of an amino-based silane coupling agent, an acrylic-based silane coupling agent, a (meth)acrylic-based silane coupling agent, a mercapto-based silane coupling agent, a vinyl-based silane coupling agent, or an isocyanate-based silane coupling agent, except for the epoxy-based silane coupling agent.

In one embodiment, the adhesive film may have a variation rate of peel strength of about 50% or less, for example, 0, 0.1, 0.5, 1, 1.5, 2, 2.5, 3, 3.5, 4, 4.5, 5, 5.5, 6, 6.5, 7, 7.5, 8, 8.5, 9, 9.5, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50%, as calculated according to Equation 2.

For example, the adhesive film may have a variation rate of peel strength of 0.1% to 20%, 0.5% to 10%, specifically 1% to 5%. Within this range, the adhesive film can easily maintain foldability even after the adhesive film is left under high temperature and high humidity conditions by reducing the variation rate of peel strength when the adhesive film is left under high temperature and high humidity conditions for a long time.

[Equation 2]

Variation rate of peel strength $= [|D - C|/C] \times 100,$

(wherein in Equation 2, C is an initial peel strength value of the adhesive film (unit: gf/25 mm) with respect to a glass plate in a specimen in which the glass plate, the adhesive film, and a corona-treated polyethylene terephthalate film are sequentially stacked one above another,

D is a peel strength value of the adhesive film (unit: gf/25 mm) with respect to the glass plate, as measured after the specimen is left at 60°C and 95% relative humidity for 10 days and left at 25°C for 2 hours).

In Equation 2, the adhesive film may have a D value of about 400 gf/25 mm or more, for example, 400, 450, 500, 550, 600, 650, 700, 750, or 800 gf/25 mm, for example, 400 gf/25 mm to 800 gf/25 mm. Within this range, the adhesive film can easily reach the variation rate of peel strength of Equation 2.

In one embodiment, the adhesive film may have a modulus of about 0.3 MPa or less, for example, 0.01, 0.05, 0.1, 0.15, 0.2, 0.25, or 0.3 MPa, for example, 0.01 MPa to 0.3 MPa, or 0.05 MPa to 0.15 MPa, as measured at -20°C after the adhesive film is left under conditions of 60°C and 95% relative humidity for 10 days. Within this range, the adhesive film can secure viscoelasticity at low temperature to exhibit good foldability at low temperature by exhibiting less variation in modulus at -20°C, as compared to an initial modulus of the adhesive film, even after the adhesive film is left under high temperature and high humidity conditions.

In one embodiment, the adhesive film may have a modulus of about 0.04 MPa or less, for example, 0.01, 0.015, 0.02, 0.025, 0.03, 0.035, or 0.04 MPa, for example, 0.01 MPa to 0.035 MPa, as measured at 60°C after the adhesive film is left under conditions of 60°C and 95% relative humidity for 10 days. Within this range, the adhesive film can secure viscoelasticity at high temperature to exhibit good foldability at high temperature by exhibiting less variation in modulus at 60°C, as compared to initial modulus, even after the adhesive film is left under high temperature and high humidity conditions.

In one embodiment, the adhesive film may have a variation rate of modulus of about 10% or less, for example, 0, 1, 2, 3, 4, 5, 6, 7, 8, 9, 10%, for example, 0% to 10%, as calculated according to Equation 3. Within this range, the adhesive film can have a low variation rate of modulus at high temperature even after the adhesive film is left under high temperature and high humidity conditions for a long time, thereby exhibiting good foldability upon repetition of folding/unfolding operations from low temperature to high temperature.

$$[\text{Equation 3}]$$

$$\text{Variation rate of modulus} = [|F - E|/E] \times 100,$$

(wherein in Equation 3, E is an initial modulus value of the adhesive film (unit: MPa), as measured at 60°C,

F is a modulus value of the adhesive film (unit: MPa) obtained from an adhesive sheet including the adhesive film and polyethylene terephthalate release films stacked on both surfaces of the adhesive film, as measured at 60°C after the specimen is left at 60°C and 95% relative humidity for 10 days and left at 25°C for 2 hours).

The polyethylene terephthalate release film may be a polyethylene terephthalate film having one surface adjoining the adhesive film and being subjected to release treatment (for example, silicone treatment or fluorine treatment) and may have a thickness of 30 $\mu$m to 100 $\mu$m.

Here, "epoxy-based silane coupling agent" means a silane coupling agent containing at least one epoxy group as an alkoxy silane monomer or an alkoxy silane oligomer. Here, "epoxy group" may mean an epoxycyclohexyl group including a 3,4-epoxycyclohexyl group and the like, a glycidoxyalkyl group including a 3-glycidoxypropyl group, and the like. For example, the epoxy-based silane coupling agent may include at least one selected from among 2-(3,4-epoxycyclohexyl)ethyl trimethoxysilane, 3-glycidoxypropylmethyl dimethoxysilane, 3-glycidoxypropyl trimethoxysilane, 3-glycidoxypropylmethyl diethoxysilane, and 3-glycidoxypropyl triethoxysilane.

The epoxy-based silane coupling agent may be present in an amount of about 0.2 parts by weight or more relative to 100 parts by weight of the monomer mixture. Within this range, the adhesive film can reach the variation rate of Equation 1 after the adhesive film is left under high temperature and high humidity conditions for a long period of time. Preferably, the epoxy-based silane coupling agent may be present in an amount of 0.2 parts by weight to 5 parts by weight, for example, 0.2, 0.3, 0.4, 0.5, 0.6, 0.7, 0.8, 0.9, 1, 2, 3, 4, or 5 parts by weight, for example, 0.2 parts by weight to 1 part by weight, more specifically 0.2 parts by weight to 0.6 parts by weight, relative to 100 parts by weight of the monomer mixture.

The composition may further include an initiator. The initiator may serve to form the adhesive film by curing the composition or to form a partial polymer of the monomer mixture through polymerization of the monomer mixture in the composition.

The initiator may include at least one selected from among a photopolymerization initiator and a heat polymerization initiator.

The photopolymerization initiator may be selected from any initiators so long as the initiator can induce polymerization or curing of a radical polymerizable compound upon photocuring by irradiation with light or the like. For example, the photopolymerization initiator may include benzoin, hydroxy ketone, amino ketone or phosphine oxide photoinitiator, and the like, specifically benzoin, benzoin methyl ether, benzoin ethyl ether, benzoin isopropyl ether, benzoin n-butyl ether, benzoin isobutyl ether, acetophenone compounds, such as 2,2-dimethoxy-2-phenyl acetophenone, 2,2'-diethoxy acetophenone, 2,2'-dibutoxy acetophenone, 2-hydroxy-2-methyl propiophenone, p-t-butyl trichloroacetophenone, p-t-butyl dichloroacetophenone, 4-chloroacetophenone, 2,2'-dichloro-4-phenoxyacetophenone, dimethylaminoacetophenone, 2,2-dimethoxy-2-phenyl acetophenone, and 2,2-diethoxy-2-phenyl acetophenone, 2-hydroxy-2-methyl-1-phenylpropane-1-one, 2-benzyl-2-dimethyl amino-1-(4-morpholinophenyl)-butane-1-one, 1-hydroxycyclohexylphenylketone, 2-methyl-1-[4-(methylthio)phenyl]-2-morpholinopropane-1-one, 4-(2-hydroxyethoxy)phenyl-2-(hydroxy-2-propyl)ketone, benzophenone, p-phenyl benzophenone, 4,4-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, p-dimethylaminobenzoic acid ester, oligo[2-hydroxy-2-methyl-1-[4-(1-methylvinyl)phenyl]propanone], 2,4,6-trimethylbenzoyl-diphenyl-phosphine oxide, and the like.

The heat polymerization initiator may be selected from typical initiators, such as azo compounds, peroxide compounds, or redox compounds. Examples of the azo compounds may include 2,2-azobis(2-methylbutyronitrile), 2,2-trilazobis(isobutyronitrile), 2,2-trilazobis(2,4-dimethylvaleronitrile), 2,2-nitazobis-2-hydroxymethylpropionitrile, dimethyl-2,2-methylazobis(2-methyl propionate), 2,2-pioazobis(4-methoxy-2,4-dimethylvaleronitrile), and the like; examples of the peroxide compounds may include inorganic peroxides, such as potassium persulfate, ammonium persulfate, and hydrogen peroxide, or organic peroxide, such as diacyl peroxide, peroxy dicarbonate, peroxy ester, tetramethylbutylperoxy neodecanoate, bis(4-butylcyclohexyl)peroxy dicarbonate, di(2-ethylhexyl)peroxy carbonate, butylperoxy neodecanoate, dipropyl peroxy dicarbonate, diisopropyl peroxy dicarbonate, diethoxyethyl peroxy dicarbonate, diethoxyhexyl peroxy dicarbonate, hexyl peroxy dicarbonate, dimethoxybutyl peroxy dicarbonate, bis(3-methoxy-3-methoxybutyl) peroxy dicarbonate, dibutyl peroxy dicarbonate, dicetyl peroxy dicarbonate, dimyristyl peroxy dicarbonate, 1,1,3,3-tetramethylbutyl peroxypivalate, hexyl peroxypivalate, butyl peroxypivalate, trimethyl hexanoyl peroxide, dimethyl hydroxybutyl peroxyneodecanoate, amyl peroxyneodecanoate, butyl peroxyneodecanoate, t-butylperoxy neoheptanoate, amyl peroxypivalate, t-butylperoxy pivalate, t-amyl peroxy-2-ethyl hexanoate, lauryl peroxide, dilauroyl peroxide, didecanoyl peroxide, benzoyl peroxide, dibenzoyl peroxide, and the like; and examples of the redox compounds may include mixtures of peroxide compounds and reducing agents, and the like, without being limited thereto.

The initiator may be present in an amount of about 0.0001 parts by weight to about 5 parts by weight, specifically 0.001 parts by weight to 3 parts by weight, more specifically 0.001 parts by weight to 1 part by weight, relative to 100 parts by weight of the monomer mixture. Within this range, the initiator can secure complete curing of the composition without deterioration in light transmittance of the adhesive film due to remaining initiator, and can exhibit good reactivity while suppressing generation of bubbles.

The composition may further include a crosslinking agent. The crosslinking agent can improve mechanical strength of the adhesive film by increasing the degree of crosslinking of the composition.

The crosslinking agent may include a polyfunctional (meth)acrylate capable of being cured by actinic radiation. For example, the crosslinking agent includes bifunctional acrylates, such as 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, dicyclopentanyl di(meth)acrylate, caprolactone-modified dicyclopentenyl di(meth)acrylate, ethylene oxide-modified di(meth)acrylate, di(meth)acryloxyethyl isocyanurate, allylated cyclohexyl di(meth)acrylate, tricyclodecane dimethanol (meth)acrylate, dimethylol dicyclopentane di(meth)acrylate, ethylene oxide-modified hexahydrophthalic acid di(meth)acrylate, tricyclodecane dimethanol (meth)acrylate, neopentyl glycol-modified trimethylpropane di(meth)acrylate, adamantane di(meth)acrylate, and 9,9-bis[4-(2-acryloyloxyethoxy)phenyl]fluorine; trifunctional acrylates, such as trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, trifunctional urethane (meth)acrylates, and tris(meth)acryloxyethyl isocyanurate; tetrafunctional acrylates, such as diglycerin tetra(meth)acrylate and pentaerythritol tetra(meth)acrylate; pentafunctional acrylates, such as dipentaerythritol penta(meth)acrylate; and hexafunctional acrylates, such as dipentaerythritol hexa(meth)acrylate, caprolactone-modified dipentaerythritol hexa(meth)acrylate, and urethane (meth)acrylates (e.g. a reaction product of an isocyanate monomer and trimethylolpropane tri(meth)acrylate), and the like, without being limited thereto.

The crosslinking agent may be present in an amount of about 0.001 parts by weight to about 5 parts by weight, for example, 0.001, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 2, 3, 4, or 5 parts by weight, specifically 0.003 parts by weight to 3 parts by weight, specifically 0.005 parts by weight to 1 part by weight, relative to 100 parts by weight of the monomer mixture. Within this range, the adhesive film can exhibit good peel strength and improved reliability.

The composition may further include additives. The additives may include typical additives used for a typical composition for adhesive films and known to those skilled in the art. For example, the additives may include at least one type selected from among pigments, UV absorbents, leveling agents, antistatic agents, and the like, without being limited thereto.

The adhesive film may have a glass transition temperature (Tg) of about - 100°C to about -10°C, for example, -100, -95, -90, -85, -80, -75, -70, -65, -60, -55, - 50, -45, -40, or -35°C, specifically -70°C to -35°C. Within this range, the adhesive film can achieve improvement in folding reliability at low temperature to at high temperature. Preferably, the adhesive film may have a glass transition temperature of -70°C to -45°C. Within this range, the adhesive film can achieve improvement in folding reliability at low temperature to at high temperature and can exhibit good foldability by relieving stress upon folding in a tensile direction.

The adhesive film may have a haze of about 2% or less, specifically 0.1% to 1% and a total light transmittance of about 90% or more, specifically 95% to 99%, in the visible spectrum (for example, at a wavelength of 380 nm to 780 nm). Within this range, the adhesive film can exhibit good optical transparency to be used in an optical display device.

The adhesive film may have a thickness of about 10 $\mu$m to about 300 $\mu$m, specifically 12 $\mu$m to 175 $\mu$m. Within this range, the adhesive film can be used in the optical display device.

The adhesive film may be a pressure sensitive adhesive film and may be manufactured by partially polymerizing the monomer mixture using an initiator, adding the epoxy-based silane coupling agent thereto to prepare a composition, and coating the composition onto a release film to form a coating layer, followed by curing, for example, photocuring, the coating layer. Curing may include irradiation with light emitted from a low pressure lamp at a wavelength of 300 nm to 400 nm and at a dose of 400 mJ/cm$^2$ to 3,000 mJ/cm$^2$ in an oxygen-free state. In preparation of the composition, the initiator, the crosslinking agent, the additives and the like may be further added. Partial polymerization may include solution polymerization, suspension polymerization, photo polymerization, bulk polymerization, or emulsion polymerization. Specifically, solution polymerization may be performed at 50°C to 100°C after adding the initiator to the monomer mixture. The initiator may be a photopolymerization initiator, such as an acetophenone initiator including 2,2-dimethoxy-2-phenyl acetophenone, 1-hydroxycyclohexylphenyl ketone, and the like. Partial polymerization may provide a viscosity of 300 cP to 50,000 cP, specifically 500 cP to 9,000 cP, at 25°C.

Next, an adhesive film according to another embodiment of the invention will be described.

The adhesive film is formed of a composition including: a monomer mixture of a monomer having a glass transition temperature of about -50°C or less in homopolymer phase and a hydroxyl group-containing (meth)acrylate; an epoxy-based silane coupling agent; and organic nanoparticles, and the adhesive film has a variation rate of shear strain of about 10% or less, as calculated according to Equation 1. The adhesive film according to this embodiment is substantially the same as the adhesive film according to the above embodiment, excepting for further comprising the organic nanoparticles.

The organic nanoparticles can further improve reliability of the adhesive film at high temperature by preventing peeling, slight lifting and/or bubble generation of the adhesive film at high temperature through further increase in modulus of the adhesive film at high temperature, as compared to the case where the composition does not include the organic nanoparticles. The organic nanoparticles may have a high glass transition temperature to increase the modulus of the adhesive film at high temperature.

The organic nanoparticles may be present in an amount of about 0.1 parts by weight to about 20 parts by weight, for example, 0.1, 0.5, 1, 2, 3, 4, 5, 6, 7, 8, 9, 10, 11, 12, 13, 14, 15, 16, 17, 18, 19, or 20 parts by weight, specifically 0.5 parts by weight to 12 parts by weight, specifically 0.5 parts by weight to 8 parts by weight, relative to 100 parts by weight of the monomer mixture. Within this range, the organic nanoparticles can increase the modulus of the adhesive film at high temperature and can improve foldability of the adhesive film at room temperature and at high temperature while securing good viscoelasticity of the adhesive film at low temperature and/or at room temperature.

The organic nanoparticles may have an average particle diameter of about 10 nm to about 400 nm, specifically 10 nm to 300 nm, more specifically 30 nm to 280 nm, still more specifically 50 nm to 280 nm. Within this range, the organic nanoparticles do not provide an adverse effect on foldability of the adhesive film and can secure transparency of the adhesive film by securing a total light transmittance of 90% or more.

A difference in index of refraction between the organic nanoparticles and a partial (meth)acrylic polymer or complete (meth)acrylic polymer formed of the monomer mixture may be about 0.1 or less, for example, 0, 0.01, 0.02, 0.03, 0.04, 0.05, 0.06, 0.07, 0.08, 0.09, 0.1, specifically 0 to 0.05, more specifically 0 to 0.02. Within this range, the adhesive film can exhibit good transparency. The organic nanoparticles may have an index of refraction of about 1.35 to about 1.70, specifically 1.40 to 1.60. Within this range, the adhesive film can exhibit good transparency.

The organic nanoparticles may have a core-shell structure or a simple structure, such as bead type nanoparticles, without being limited thereto. The organic nanoparticles may have a core-shell structure, in which the core and the shell satisfy the following Equation 4. That is, the organic nanoparticles may include nanoparticles in which both the core and the shell are formed of organic materials. With the organic nanoparticles having the core-shell structure, the adhesive film can exhibit good foldability and balance between elasticity and flexibility.

[Equation 4]

$$Tg(c) < Tg(s)$$

(wherein in Equation 4, Tg(c) is the glass transition temperature (unit: °C) of the core,
Tg(s) is the glass transition temperature (unit: °C) of the shell).

Herein, the term "shell" means an outermost layer of the organic nanoparticle. The core may be a spherical particle. In some embodiments, the core may further include an additional layer surrounding the spherical particle so long as the core has a glass transition temperature satisfying the above relation.

Specifically, the core may have a glass transition temperature of about - 150°C to about 10°C, for example, -150, -140, -130, -120, -110, -100, -90, -80, -70, - 60, -50, -40, -30, -20, -10, 0, or 10°C, specifically -150°C to -5°C, more specifically -150°C to -20°C. Within this range, the adhesive film can have good viscoelasticity at low temperature and/or at room temperature. The core may include at least one selected from among polyalkylacrylate, polysiloxane and polybutadiene each having a glass transition temperature within this range.

The polyalkylacrylate may include at least one selected from among poly methylacrylate, polyethylacrylate, polypropylacrylate, polybutylacrylate, polyisopropylacrylate, polyhexylacrylate, polyhexylmethacrylate, polyethylhexyl acrylate, polyethylhexylmethacrylate, and polysiloxane, without being limited thereto.

The polysiloxane may be, for example, an organosiloxane (co)polymer. The organosiloxane (co)polymer may be a non-crosslinked or crosslinked organosiloxane (co)polymer. The crosslinked organosiloxane (co)polymer may be used to secure impact resistance and colorability. Specifically, the crosslinked organosiloxane (co)polymer may include crosslinked dimethylsiloxane, methylphenylsiloxane, diphenylsiloxane, and mixtures thereof. With a copolymer of two or more organosiloxanes, the nanoparticles can have an index of refraction of 1.41 to 1.50.

A crosslinked state of the organosiloxane (co)polymer may be determined based on the degree of dissolution in various organic solvents. As the degree of crosslinking of the organosiloxane (co)polymer intensifies, the degree of dissolution of the organosiloxane (co)polymer is reduced. A solvent for determination of the crosslinked state may include acetone, toluene, and the like. Specifically, the organosiloxane (co)polymer may have a moiety that is not dissolved in acetone or toluene. The organosiloxane copolymer may include about 30% or more of insolubles in toluene.

The organosiloxane (co)polymer may further include a crosslinked polymer of an alkyl acrylate. The crosslinked polymer of the alkyl acrylate may include methyl acrylate, ethyl acrylate, n-butyl acrylate, 2-ethylhexyl acrylate, and the like. For example, the crosslinked polymer of the alkyl acrylate may be n-butyl acrylate or 2-ethylhexyl acrylate, which has a low glass transition temperature.

Specifically, the shell may have a glass transition temperature of about 15°C to about 150°C, for example, 15, 20, 30, 40, 50, 60, 70, 80, 90, 100, 110, 120, 130, 140, or 150°C, specifically 35°C to 150°C, more specifically 50°C to 140°C. Within this range, the organic nanoparticles can exhibit good dispersion in the acrylic copolymer. The shell may include poly(alkyl methacrylate) having a glass transition temperature within this range. For example, the shell may include at least one selected from among polymethylmethacrylate (PMMA), polyethylmethacrylate, polypropylmethacrylate, polybutylmethacrylate, polyisopropylmethacrylate, polyisobutylmethacrylate, and polycyclohexylmethacrylate, without being limited thereto.

In the organic nanoparticles, the core may be present in an amount of about 30 wt% to about 99 wt%, specifically 40 wt% to 95 wt%, more specifically 50 wt% to 90 wt%. Within this range, the adhesive film can exhibit good foldability in a broad temperature range. In the organic nanoparticles, the shell may be present in an amount of about 1 wt% to about 70 wt%, specifically 5 wt% to 60 wt%, more specifically 10 wt% to 50 wt%. Within this range, the adhesive film can exhibit good foldability in a broad temperature range.

In the adhesive film, the organic nanoparticles may be present in an amount of about 0.1 wt% to about 20 wt%, for example, 0.1, 0.5, 1, 2, 3, 4, 5, 6, 7, 8, 9, 10, 11, 12, 13, 14, 15, 16, 17, 18, 19, or 20 wt%, specifically 0.5 wt% to 12 wt%, specifically 0.5 wt% to 8 wt%. Within this range, the organic nanoparticles can secure high modulus of the adhesive film at high temperature and can improve foldability of the adhesive film at room temperature and at high temperature while securing good viscoelasticity at low temperature and/or at room temperature.

The organic nanoparticles may be prepared by typical emulsion polymerization, suspension polymerization, or solution polymerization.

An optical member according to one embodiment of the present invention includes an optical film and an adhesive film formed on at least one surface of the optical member, wherein the adhesive film includes the adhesive film according to the embodiments of the invention. Accordingly, the optical member exhibits good bending/folding properties to be used in a flexible display apparatus.

In one embodiment, the optical film provides optical functions, for example, polarization, optical compensation, display quality improvement and/or conductivity, to a display apparatus. Examples of the optical film may include a window film, a window, a polarizing plate, a color filter, a retardation film, an elliptical polarizing film, a reflective polarizing film, an antireflection film, a compensation film, a brightness enhancing film, an alignment film, a light diffusion film, a glass shatterproof film, a surface protective film, an OLED device barrier layer, a plastic LCD substrate, and a transparent electrode film including indium tin oxide (ITO), fluorinated tin oxide (FTO), aluminum-doped zinc oxide (AZO), carbon nanotubes (CNT), Ag nanowires, graphene, and the like. These optical films can be easily manufactured by a person having ordinary knowledge in the art

For example, a touch panel may be formed by attaching a window or an optical film to a touchpad via the adhesive film. Alternatively, the adhesive film may be applied to a typical polarizing film as in the art.

In another embodiment, the optical film is an optically transparent optical film and an optical member including the optical film and an adhesive film may act as a support layer for a display element. For example, the display element may include a window film and the like. The window film may include the optical member and a window coating layer (for example: silicone coating layer) formed on the optical member. Specifically, the optical film may have a total light transmittance of 90% or more in the visible spectrum and may be a film formed of at least one resin selected from among cellulose resins including triacetylcellulose and the like, polyester resins including polyethylene terephthalate, polyethylene naphthalate, polybutylene terephthalate, polybutylene naphthalate, and the like, polycarbonate resins, poly imide resins, polystyrene resins, polyacrylate resins including poly(methyl methacrylate) and the like, cyclic olefin polymer resins, acryl resins, and polyamide resins. The optical film may have a thickness of 10 $\mu$m to 100 $\mu$m, specifically 20 $\mu$m to 75 $\mu$m, more specifically 30 $\mu$m to 50 $\mu$m. Within this range, the optical film can be used as a support layer for the display element.

The optical member may be a bilayer optical member including an optical film and an adhesive film formed on one surface of the optical film. Alternatively, the optical member may be a trilayer film laminate of three or more films including at least two optical films stacked one above another via the adhesive film according to the present invention.

In one embodiment, the optical member may be a trilayer film laminate in which a first optical film is stacked on a second optical film via the adhesive film according to the present invention. Each of the first optical film and the second optical film may be a film formed of at least one resin selected from among a polyethylene terephthalate resin, a polycarbonate resin, a polyimide resin, a polyacrylate resin, a cyclic olefin polymer resin, and an acryl resin. Each of the first optical film and the second optical film may have a thickness of 10 $\mu$m to 100 $\mu$m, specifically 20 $\mu$m to 75 $\mu$m, more specifically 30 $\mu$m to 50 $\mu$m, and the adhesive film may have a thickness of 10 $\mu$m to 100 $\mu$m. Within this range, the optical member can maximize impact resistance while maintaining good foldability. The first optical film and the second optical film may be formed of the same or different materials and may have the same or different thicknesses.

An optical display device according to the present invention includes the adhesive film according to the present invention.

The optical display device may include an organic light emitting diode display, a liquid crystal display, and the like. The optical display device may include a flexible device display. Alternatively, the optical display device may include a non-flexible device display.

[Mode for Invention]

Next, the present invention will be described in more detail with reference to some examples. It should be understood that these examples are provided for illustration only and are not to be construed in any way as limiting the invention.

**Preparative Example: Preparation of organic nanoparticles**

Organic nanoparticles were prepared by emulsion polymerization. A core was formed of poly(butyl acrylate) and a shell was formed of poly(methyl methacrylate). In the organic nanoparticles, the shell was present in an amount of 35 wt% and the core was present in an amount of 65 wt%, and the organic nanoparticles had an average particle diameter of 100 nm and an index of refraction of 1.48.

**Example 1**

In a reactor, 100 parts by weight of a monomer mixture as shown in Table 1, 100 ppm of an initiator (Irgacure 6510), and 3 parts by weight of the prepared organic nanoparticles were evenly mixed. After replacing dissolved oxygen in the reactor with nitrogen gas for 30 min, the monomer mixture was subjected to partial polymerization through irradiation with UV light for several minutes under a low-pressure mercury lamp, thereby preparing a viscous liquid having a viscosity of 40 cPs to 50 cPs at 25°C. Then, the low-pressure mercury lamp was turned off and polymerization reaction was completed while cooling the reaction product by supplying air into the reactor for 30 min, thereby preparing a (meth)acrylic prepolymer from the monomer mixture. In the reactor, a (meth)acrylic prepolymer prepared from the monomer mixture, unreacted monomers, and the organic nanoparticles were present.

Thereafter, a mixture of 0.2 parts by weight of Omnirad 127 and 0.1 parts by weight of Omnirad 651 as initiators, 0.035 parts by weight of dipentaerythritol hexaacrylate (DPHA), and 0.2 parts by weight of an epoxy-based silane coupling agent (KBM-403, 3-glycidoxypropyltrimethoxysilane, Shin-Etsu Chemical Co., Ltd.) were mixed, thereby preparing a composition for adhesive films.

The composition for adhesive films was coated to a predetermined thickness on one surface of a polyethylene terephthalate (PET) release film by blade coating. Then, a PET release film was stacked on the coating layer, followed by primary curing through irradiation with UV light at a dose of 1,200 mJ/cm$^2$ under a low-pressure mercury lamp and secondary curing through irradiation with UV light at a dose of 2,000 mJ/cm$^2$ under a metal halide lamp, thereby preparing an adhesive sheet of the PET release film/adhesive film/PET release film.

## Examples 2 to 5

Adhesive sheets were prepared in the same manner as in Example 1 except that the components of the composition for adhesive films were changed as listed in Table 1.

## Comparative Examples 1 to 4

Adhesive sheets were prepared in the same manner as in Example 1 except that the components of the composition for adhesive films were changed as listed in Table 1.

The adhesive films prepared by removing the PET release films from the adhesive sheets prepared in Examples and Comparative Examples were evaluated as to the following properties, as listed in Table 1, and evaluation results are shown in Table 1.

(1) Peel strength (unit: gf/25 mm): An adhesive sheet sample (length × width: 25 mm × 25 mm) was prepared from the adhesive sheets prepared in Examples and Comparative Examples. One surface of the PET film having a size of 150 mm × 25 mm × 75 μm (length × width × thickness) was subjected to corona treatment twice (total dose: 156) under plasma discharge at 78 dose (unit: W/(m/minm)) using a corona treatment device. After removing the PET release films from both surfaces of the adhesive sheet sample, one surface of the adhesive film was attached to the corona-treated surface of the PET film and the other surface of the adhesive film was attached to a glass plate (soda lime glass), followed by compression under a 2 kg hand roller, thereby preparing a specimen.

The prepared specimen was secured to a peel strength meter (TA.XT-Plus Texture Analyzer, Stable Micro System Co., Ltd.). Peel strength at which the adhesive film and the PET film start to be removed from the glass plate was measured at 25°C by pulling the adhesive film and the PET film from the glass plate to an angle of 180° at a rate of 300 mm/min using the TA.XT-Plus Texture Analyzer. This value was defined as "initial peel strength."

An adhesive sheet (length × width: 25 mm × 25 mm) was prepared from the adhesive sheets prepared in Examples and Comparative Examples. A specimen was prepared in the same manner as above, left in a chamber at 60°C and 95% relative humidity for 10 days, and left outside the chamber at 25°C for 2 hours. Then, peel strength of the specimen was measured in the same manner as in measurement of initial peel strength and was defined as "post-high temperature/humidity peel strength. "

(2) Modulus (unit: MPa): Plural adhesive films prepared in each of Examples and Comparative Examples were stacked to form a 500 μm thick adhesive film sample. The adhesive film sample was punched using an 8 mm diameter punching machine, thereby preparing a specimen. Modulus was evaluated in a temperature sweep test mode using a rheometer (DHR3, TA Instrument) as a dynamic viscoelasticity instrument while increasing temperature from -50°C to 100°C at a rate of 5°C/min under conditions of a shear rate of 1 Hz and 1% strain. Modulus was measured at -20°C and at 60°C and was defined as "initial modulus."

The adhesive sheets (in a state that the release PET films were stacked on both surfaces of the adhesive film) prepared in Examples and Comparative Examples were left in a chamber at 60°C and 95% relative humidity for 10 days, and left outside the chamber at 25°C for 2 hours. Then, the adhesive films were prepared and modulus was measured in the same manner as in measurement of initial modulus and was defined as "post-high temperature/humidity modulus".

(3) Shear strain (unit: %): An adhesive film (length × width: 100 mm × 25 mm) was obtained by removing the PET films from both sides of each of the adhesive sheets prepared in Examples and Comparative Examples. Plural adhesive films were stacked to form a laminate, which in turn was punched using an 8 mm diameter punching machine, thereby preparing a cylindrical specimen (thickness: 400 μm, diameter: 8 mm) having upper and lower surfaces.

The cylindrical specimen was secured to a rheometer (DHR3, TA Instrument) as a dynamic viscoelasticity instrument such that the upper and lower surfaces of the specimen were coupled to upper and lower jigs of the rheometer, respectively. Under conditions of chamber temperature: 60°C, axial force: 1N, torque: 2,000 Pa, and time: 600 seconds, strain of the specimen at 600 seconds was measured as shear strain and defined as "initial shear strain."

The adhesive sheets (in a state that the release PET films were stacked on both surfaces of the adhesive film) prepared in Examples and Comparative Examples were left in a chamber at 60°C and 95% relative humidity for 10 days, and left outside the chamber at 25°C for 2 hours. Then, the adhesive films were prepared and shear strain was measured in the same manner as in measurement of initial shear strain and was defined as "post-high temperature and high humidity shear strain." A variation rate was calculated according to Equation 1.

(4) Flexural reliability 1 (@-20°C):

Module specimens were prepared by sequentially stacking a window film, an adhesive film, a polarizer, an adhesive film, and an OLED panel. In preparation of the modules, the window film, the adhesive film, the polarizer, the adhesive film, and the OLED panel were as follows:

- Window film: A PET film (thickness: 100 $\mu$m, Cosmoshine TA015, Toyobo Co., Ltd.) was used.
- Adhesive film: The adhesive films prepared in Examples and Comparative Examples were used.
- Polarizer: An iodine-dyed PVA resin was used. An 80 $\mu$m thick polyvinyl alcohol film (degree of saponification: 99.5, degree of polymerization: 2,000) was dipped in a 0.3% iodine aqueous solution for dyeing and stretched to an elongation of 5.0 in the MD. Then, the stretched polyvinyl alcohol film was dipped in a 3% boric acid solution and in a 2% potassium iodide aqueous solution and subject to color correction, followed by drying at 50°C for 4 min, thereby preparing a polarizer (thickness: 25 $\mu$m).
- OLED Panel: A PET film (thickness: 100 $\mu$m, Cosmoshine TA015, Toyobo Co., Ltd.) was used.

Each of the prepared module specimens was cut to a size of 170 mm × 110 mm (length × width) and left in a chamber at 60°C and 95% humidity for 10 days, followed by 100,000 cycles of folding at -20°C to evaluate generation of bubbles, cracks and delamination on the module specimen. Upon folding, the specimen was subjected to folding in the longitudinal direction of the specimen and in the OLED panel direction at a folding rate of 30 cycles per minute such that a bent portion of the specimen had a radius of curvature of 1.5 mm, in which 1 cycle refers to an operation of folding the adhesive film to have the radius of curvature, followed by unfolding the adhesive film back to 180°. No generation of bubbles, cracks and delamination was rated as "OK" and generation of at least one type among bubbles, cracks and delamination was rated as "NG."

(5) Flexural reliability 2 (@60°C): A module specimen was prepared in the same manner as in (4). The module was left in a chamber at 60°C and 95% relative humidity for 10 days and flexural reliability was evaluated at 60°C in the same manner as in (4).

Table 1

| | | Example | | | | | Comparative Example | | | |
|---|---|---|---|---|---|---|---|---|---|---|
| | | 1 | 2 | 3 | 4 | 5 | 1 | 2 | 3 | 4 |
| Monomer | Monomer 1 | 59 | 59 | 59 | 59 | 59 | 59 | 59 | 59 | 59 |
| | Monomer 2 | 17 | 17 | 17 | 17 | 17 | 17 | 17 | 17 | 17 |
| | Monomer 3 | 24 | 24 | 24 | 24 | 24 | 24 | 24 | 24 | 24 |
| Organic nanoparticles | | 3 | 3 | 3 | 0 | 3 | 3 | 3 | 3 | 3 |
| | Omnirad 127 | 0.2 | 0.2 | 0.2 | 0.2 | 0.2 | 0.2 | 0.2 | 0.2 | 0.2 |
| | Omnirad 651 | 0.1 | 0.1 | 0.1 | 0.1 | 0.1 | 0.1 | 0.1 | 0.1 | 0.1 |
| | DPHA | 0.035 | 0.035 | 0.035 | 0.035 | 0.035 | 0.035 | 0.035 | 0.035 | 0.035 |
| | Kind of silane coupling agent | SC 1 | SC 1 | SC 1 | SC 1 | SC 1 | SC 2 | SC 3 | SC 4 | - |
| | Content of silane coupling agent | 0.2 | 0.2 | 0.6 | 0.2 | 0.2 | 0.2 | 0.2 | 0.2 | 0 |
| Thickness ($\mu$m) | | 50 | 35 | 35 | 35 | 25 | 35 | 35 | 35 | 35 |
| Peel strength | Initial | 612 | 572 | 598 | 581 | 569 | 571 | 604 | 587 | 606 |

(continued)

| | | Example | | | | | Comparative Example | | | |
|---|---|---|---|---|---|---|---|---|---|---|
| | | 1 | 2 | 3 | 4 | 5 | 1 | 2 | 3 | 4 |
| | Post-high temperature /humidity | 589 | 547 | 586 | 569 | 536 | 113 | 122 | 235 | 215 |
| | Variation rate of Equation 2 | 3.76 | 4.37 | 2.01 | 2.07 | 5.80 | 80.21 | 79.80 | 59.97 | 64.52 |
| Modulus (@-20°C) | Initial | 0.086 | 0.085 | 0.089 | 0.088 | 0.086 | 0.099 | 0.092 | 0.096 | 0.094 |
| | Post-high temperature /humidity | 0.087 | 0.088 | 0.087 | 0.087 | 0.084 | 0.100 | 0.093 | 0.093 | 0.096 |
| Modulus (@60°C) | Initial | 0.027 | 0.023 | 0.024 | 0.023 | 0.024 | 0.027 | 0.023 | 0.026 | 0.024 |
| | Post-high temperature /humidity | 0.026 | 0.025 | 0.026 | 0.024 | 0.024 | 0.042 | 0.039 | 0.040 | 0.027 |
| | Variation rate of Equation 3 | 3.70 | 8.70 | 8.33 | 4.35 | 0 | 55.55 | 69.57 | 53.85 | 12.5 |
| Shear strain | Initial | 18.8 | 20.8 | 19.5 | 20.1 | 18.9 | 22.7 | 21.1 | 20.6 | 18.3 |
| | Post-high temperature /humidity | 18.3 | 20.9 | 18.9 | 20.5 | 18.7 | 8.1 | 8.2 | 8.3 | 15.2 |
| | Variation rate of Equation 1 | 2.66 | 0.48 | 3.07 | 1.99 | 1.06 | 64.32 | 61.14 | 59.71 | 16.94 |
| Flexural reliability 1 (@-20°C) | | OK | OK | OK | OK | OK | OK | OK | OK | OK |
| Flexural reliability 2 (@60°C) | | OK | OK | OK | OK | OK | NG | NG | NG | NG |

*Monomer 1: 2-ethylhexyl acrylate(branched chain type, homopolymer Tg: -70°C)

*Monomer 2: 4-hydroxybutyl acrylate(homopolymer Tg: -40°C)

*Monomer 3: 2-ethylhexyl diethylene glycol acrylate(homopolymer Tg: - 72°C)

*Omnirad 127 (IGM Resins B.V.)

*Omnirad 651 (IGM Resins B.V.)

*DPHA: Dipentaerythritol hexaacrylate *SC 1: Epoxy-based silane coupling agent (3-glycidoxypropyltrimethoxysilane, KBM-403, Shin-Etsu Chemical Co., Ltd.)

*SC 2: Methacrylic-based silane coupling agent (3-methacryloxypropyl triethoxysilane, KBE-503, Shin-Etsu Chemical Co., Ltd.)

*SC 3: Acrylic-based silane coupling agent (3-acryloxypropyl trimethoxysilane, KBM-5103, Shin-Etsu Chemical Co., Ltd.)

*SC 4: Amino-based silane coupling agent, 3-aminopropyl triethoxysilane (KBE-903, Shin-Etsu Chemical Co., Ltd.)

As shown in Table 1, the adhesive films according to the present invention had a shear strain variation rate of 10% or less, as calculated according to Equation 1, thereby exhibiting good waterproof properties with less variation in rheological properties even after the adhesive film was left under high temperature and high humidity conditions for a long time, and exhibited good foldability at low temperature and good foldability at high temperature by satisfying the variation rates of Equations 2 and 3 according to the present invention.

Conversely, the adhesive films of Comparative Examples failed to exhibit foldability at low temperature and at high temperature, and had a shear strain variation rate of greater than 10%, as calculated according to Equation 1, and poor waterproof properties with significant variation in rheological properties after the adhesive film was left under high temperature/humidity conditions for a long time. Thus, the adhesive films of Comparative Examples could not be used in a foldable display requiring waterproof properties.

It should be understood that various modifications, changes, alterations, and equivalent embodiments can be made by those skilled in the art without departing from the spirit and scope of the invention.

**Claims**

1. An adhesive film formed of a composition comprising: a monomer mixture of a monomer having a glass transition temperature of about -50°C or less in homopolymer phase and a hydroxyl group-containing (meth)acrylate; and an epoxy-based silane coupling agent,
   the adhesive film having a variation rate of shear strain of about 10% or less, as calculated according to Equation 1:

   [Equation 1]

   $$\text{Variation rate of shear strain} = [|B - A|/A] \times 100,$$

   (wherein in Equation 1, A is an initial shear strain value of the adhesive film (unit: %),
   B is a shear strain value of the adhesive film (unit: %) obtained from an adhesive sheet comprising the adhesive film and polyethylene terephthalate release films stacked on both surfaces of the adhesive film, as measured after the adhesive sheet is left at 60°C and 95% relative humidity for 10 days and left at 25°C for 2 hours).

2. The adhesive film as claimed in claim 1, wherein the adhesive film has an A value of about 10% or more and a B value of about 10% or more in the Equation 1.

3. The adhesive film as claimed in claim 1, wherein the adhesive film has an initial modulus of about 0.3 MPa or less, as measured at -20°C.

4. The adhesive film as claimed in claim 1, wherein the adhesive film has an initial modulus of about 0.05 MPa or less, as measured at 60°C.

5. The adhesive film as claimed in claim 1, wherein the adhesive film has a variation rate of peel strength of about 20% or less, as calculated according to Equation 2:

   [Equation 2]

   $$\text{Variation rate of peel strength} = [|D - C|/C] \times 100,$$

   (wherein in Equation 2, C is an initial peel strength value of the adhesive film (unit: gf/25 mm) with respect to a glass plate in a specimen in which the glass plate, the adhesive film, and a corona-treated polyethylene terephthalate film are sequentially stacked one above another,
   D is a peel strength value of the adhesive film (unit: gf/25 mm) with respect to the glass plate, as measured after the specimen is left at 60°C and 95% relative humidity for 10 days and left at 25°C for 2 hours).

6. The adhesive film as claimed in claim 5, wherein the adhesive film has a D value of about 400 gf/25 mm or more in the Equation 2.

7. The adhesive film as claimed in claim 1, wherein the adhesive film has a modulus of about 0.3 MPa or less, as measured at -20°C after the adhesive film is left under conditions of 60°C and 95% relative humidity for 10 days.

8. The adhesive film as claimed in claim 1, wherein the adhesive film has a variation rate of modulus of about 10% or less, as calculated according to Equation 3:

[Equation 3]

$$\text{Variation rate of modulus} = [|F - E|/E] \times 100,$$

(wherein in Equation 3, E is an initial modulus value of the adhesive film, as measured at 60°C (unit: MPa), F is a modulus value of the adhesive film (unit: MPa) obtained from an adhesive sheet comprising the adhesive film and polyethylene terephthalate release films stacked on both surfaces of the adhesive film, as measured at 60°C after the adhesive sheet is left at 60°C and 95% relative humidity for 10 days and left at 25°C for 2 hours).

9. The adhesive film as claimed in claim 1, wherein the epoxy-based silane coupling agent is present in an amount of about 0.2 parts by weight to about 5 parts by weight relative to 100 parts by weight of the monomer mixture.

10. The adhesive film as claimed in claim 1, wherein the epoxy-based silane coupling agent comprises at least one selected from among 2-(3,4-epoxycyclohexyl)ethyl trimethoxysilane, 3-glycidoxypropylmethyl dimethoxysilane, 3-glycidoxypropyl trimethoxysilane, 3-glycidoxypropylmethyl diethoxysilane, and 3-glycidoxypropyl triethoxysilane.

11. The adhesive film as claimed in claim 1, wherein the monomer having a glass transition temperature of about -50°C or less in homopolymer phase has a branched chain.

12. The adhesive film as claimed in claim 1, wherein the monomer having a r glass transition temperature of about -50°C or less in homopolymer phase comprises a mixture of a (meth)acrylic acid ester containing an unsubstituted $C_3$ to $C_{20}$, an alkylene glycol group-free alkyl group and a (meth)acrylic acid ester an unsubstituted $C_3$ to $C_{20}$, containing an alkylene glycol group-containing alkyl group.

13. The adhesive film as claimed in claim 12, wherein each of the alkylene glycol group-free alkyl group and the alkylene glycol group-containing alkyl group has a branched chain.

14. The adhesive film as claimed in claim 12, wherein the (meth)acrylic acid ester containing the unsubstituted $C_3$ to $C_{20}$, an alkylene glycol group-free alkyl group is present in an amount of about 50 wt% to about 80 wt% in the monomer mixture.

15. The adhesive film as claimed in claim 12, wherein the (meth)acrylic acid ester containing the unsubstituted $C_3$ to $C_{20}$, an alkylene glycol group-containing alkyl group is present in an amount of about 10 wt% to about 40 wt% in the monomer mixture.

16. The adhesive film as claimed in claim 1, wherein the monomer mixture comprises about 50 wt% to about 99 wt% of the monomer having the glass transition temperature of about -50°C or less in homopolymer phase and about 1 wt% to about 50 wt% of the hydroxyl group-containing (meth)acrylate.

17. The adhesive film as claimed in claim 1, further comprising: organic nanoparticles.

18. The adhesive film as claimed in claim 17, wherein the organic nanoparticles are present in an amount of about 0.1 parts by weight to about 20 parts by weight relative to 100 parts by weight of the monomer mixture.

19. The adhesive film as claimed in claim 17, wherein the organic nanoparticles comprise core-shell type nanoparticles satisfying Equation 4:

[Equation 4]

$$Tg(c) < Tg(s),$$

(wherein in Equation 4, Tg(c) is a glass transition temperature of the core (unit: °C), Tg(s) is a glass transition temperature of the shell (unit: °C)).

20. An optical member comprising: an optical film and an adhesive film formed on at least one surface of the optical film, the adhesive film comprising the adhesive film as claimed in any one of claims 1 to 19.

**21.** An optical display device comprising the optical member as claimed in claim 20.

【FIG. 1】

## INTERNATIONAL SEARCH REPORT

| International application No. |
|---|
| **PCT/KR2021/016105** |

**A.    CLASSIFICATION OF SUBJECT MATTER**

**C09J 7/38**(2018.01)i; **C09J 4/00**(2006.01)i; **C09J 133/00**(2006.01)i; **C08K 9/10**(2006.01)i; **C08K 5/5415**(2006.01)i

According to International Patent Classification (IPC) or to both national classification and IPC

**B.    FIELDS SEARCHED**

Minimum documentation searched (classification system followed by classification symbols)

C09J 7/38(2018.01); B32B 7/02(2006.01); C09J 133/06(2006.01); C09J 133/08(2006.01); C09J 133/14(2006.01); C09J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 점착(adhesive), 필름(film), 실란(silane), 아크릴레이트(acrylate), 박리(flaking)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2006-0047584 A (NITTO DENKO CORPORATION) 18 May 2006 (2006-05-18) See claims 1-4; and paragraphs [0002]-[0134]. | 1-8,11-16,20,21 |
| Y | | 9,10,17-19 |
| Y | KR 10-1943348 B1 (FUJIMORI KOGYO CO., LTD.) 17 April 2019 (2019-04-17) See paragraphs [0043]-[0062]. | 9,10,17-19 |
| A | JP 3849889 B2 (MITSUBISHI RAYON CO., LTD.) 22 November 2006 (2006-11-22) See entire document. | 1-21 |
| A | KR 10-2020-0040627 A (SAMSUNG SDI CO., LTD.) 20 April 2020 (2020-04-20) See entire document. | 1-21 |
| A | JP 5535987 B2 (NITTO DENKO CORPORATION) 02 July 2014 (2014-07-02) See entire document. | 1-21 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 February 2022** | **15 February 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/016105**

| Patent document cited in search report | | | Publication date (day/month/year) | Patent family member(s) | | | Publication date (day/month/year) |
|---|---|---|---|---|---|---|---|
| KR | 10-2006-0047584 | A | 18 May 2006 | CN | 1693401 | A | 09 November 2005 |
| | | | | CN | 1693406 | B | 08 December 2010 |
| | | | | EP | 1591506 | A1 | 02 November 2005 |
| | | | | EP | 1591506 | B1 | 17 March 2010 |
| | | | | JP | 2005-314579 | A | 10 November 2005 |
| | | | | KR | 10-2012-0006465 | A | 18 January 2012 |
| | | | | TW | 200613490 | A | 01 May 2006 |
| | | | | TW | I365903 | B | 11 June 2012 |
| | | | | US | 2005-0244633 | A1 | 03 November 2005 |
| | | | | US | 8153251 | B2 | 10 April 2012 |
| KR | 10-1943348 | B1 | 17 April 2019 | CN | 107523246 | A | 29 December 2017 |
| | | | | CN | 107523246 | B | 09 April 2021 |
| | | | | JP | 2017-222797 | A | 21 December 2017 |
| | | | | JP | 6521906 | B2 | 29 May 2019 |
| | | | | KR | 10-1887886 | B1 | 13 August 2018 |
| | | | | KR | 10-1998072 | B1 | 09 July 2019 |
| | | | | KR | 10-2017-0142097 | A | 27 December 2017 |
| | | | | KR | 10-2019-0011298 | A | 01 February 2019 |
| | | | | TW | 201800530 | A | 01 January 2018 |
| JP | 3849889 | B2 | 22 November 2006 | JP | 9157618 | A | 17 June 1997 |
| KR | 10-2020-0040627 | A | 20 April 2020 | CN | 113166599 | A | 23 July 2021 |
| | | | | US | 2021-0332273 | A1 | 28 October 2021 |
| | | | | WO | 2020-075951 | A1 | 16 April 2020 |
| JP | 5535987 | B2 | 02 July 2014 | JP | 2011-202176 | A | 13 October 2011 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20170070370